# EUROPEAN PATENT APPLICATION

(11) **EP 3 713 076 A1**
(43) Date of publication of application: **23.09.2020**
(21) Application number: 19776373.3
(22) Date of filing: 27.03.2019
(51) Int. Cl.: H02N 11/00, F16H 25/14, H02K 7/06

(54) **ACTUATOR**

(30) Priority: 28.03.2018 JP 2018062004
(71) Applicant: Mitsubishi Heavy Industries, Ltd., Chiyoda-ku Tokyo 100-8332 (JP)
(72) Inventor: MORISAKI, Yuki, Tokyo 100-8332 (JP); KOMATSU, Naotaka, Tokyo 100-8332 (JP); SAIKI, Yasuhiro, Tokyo 100-8332 (JP); OYAMA, Kenichi, Tokyo 100-8332 (JP)
(74) Representative: Henkel & Partner mbB
(86) International application number: PCT/JP2019/013152
(87) International publication number: WO 2019/189342

(57) **Abstract**

The purpose of the present invention is to provide an actuator in which jamming of sliding surfaces hardly occurs and a desired operation can be reliably performed. The actuator (1) is provided with: a housing (3); a shaft (4) having one end side housed in the housing (3) and the other end side placed outside the housing (3) and capable of moving along the axial direction; polymer material actuators (5), (6) housed in the housing (3), having one end connected to the inside of the housing (3) and the other end connected to the shaft (4), and expanding and contracting by the application of voltage; and a movement adjustment portion for adjusting the movement of the shaft (4) in accordance with the position of the shaft (4). The movement adjustment portion has: an electric motor (7) installed on the housing (3); a cam (9) connected to the electric motor (7) and rotating by the drive force of the electric motor (7); and a cam follower (10) provided on the shaft (4) and touching the cam (9).

## Description

### Technical Field

The present invention relates to an actuator.

### Background Art

A hydraulic actuator or an electric actuator is used so that a control surface (control wing surface) of an aircraft is driven. Although the electric actuator uses an electric motor as a driving source, the electric motor is lower in output density than a hydraulic pump that is a hydraulic actuator driving source. Accordingly, the electric actuator requires a motion conversion mechanism having a deceleration mechanism, a ball screw, and the like.

PTL 1 and PTL 2 below disclose a portal operation device (PTL 1) and a clutch actuator (PTL 2) having a cam mechanism converting a rotational motion into a linear motion.

### Citation List

### Patent Literature

[PTL 1] Japanese Unexamined Patent Application Publication No. 9-310743
[PTL 2] Japanese Unexamined Patent Application Publication No. 2011-106613

### Summary of Invention

### Technical Problem

The motion conversion mechanism having the deceleration mechanism, the ball screw, and the like in the electric actuator may cause fixation (jamming) on the sliding surfaces of the deceleration mechanism, the ball screw, and the like. The actuator is incapable of performing a desired operation when the fixation occurs.

The fixation occurring in the electric actuator may occur in both the ball screw and a gear of the deceleration mechanism connected to the electric motor. As for the gear, it is possible to avoid biting (insufficient sliding performance) attributable to contamination with foreign matter and prevent the fixation by adopting a magnetic gear or a magnetic geared motor in place of a mechanical gear. However, another measure needs to be taken as to the ball screw.

In particular, an electric actuator used for driving an aircraft control surface frequently reciprocates within a narrow range in order to adjust the inclination angle of the control surface. Accordingly, a lubricant may be insufficient with the lubricant having flowed out on the sliding surface of the ball screw or the ball or sliding groove of the ball screw may be damaged or deformed due to a local increase in surface pressure, and then the fixation is highly likely to occur. In addition, malfunction arises in the event of damage to at least one of multiple balls.

It should be noted that a speed summing mechanism is applied to some ball screws and the speed summing mechanism drives a screw shaft and a nut with separate motors. However, in the case of the fixation attributable to the damage to the ball or sliding groove or the like, the speed summing mechanism is not a drastic measure against the occurrence of the fixation. In addition, although it is conceivable to install a high-torque electric motor in order to counter the occurrence of the fixation, the installation leads to an increase in total device size and weight.

The present invention has been made in view of such circumstances, and an object of the present invention is to provide an actuator with which fixation of a sliding surface is unlikely to occur and a desired operation can be reliably performed.

### Solution to Problem

In order to solve the above problems, an actuator of the present invention adopts the following means.

In other words, an actuator according to one aspect of the present invention includes a housing, a shaft portion having one end side accommodated in the housing, having the other end side installed outside the housing, and movable along an axial direction, a polymer material actuator accommodated in the housing, having one end connected to an inside of the housing and the other end connected to the shaft portion, and extending and contracting by voltage application, and a movement adjustment unit adjusting a movement of the shaft portion in accordance with a position of the shaft portion.

According to this configuration, one end of the polymer material actuator is connected to the inside of the housing, the other end of the polymer material actuator is connected to the shaft portion movable along the axial direction, the polymer material actuator is extended and contracted by voltage application, and the shaft portion moves along the axial direction as a result. One end side of the shaft portion is accommodated in the housing, the other end side of the shaft portion is installed outside the housing, and thus the other end of the shaft portion linearly reciprocates outside the housing. In addition, the movement adjustment unit adjusts the movement of the shaft portion in accordance with the position of the shaft portion. Accordingly, fixation of a sliding surface is unlikely to occur and a desired operation can be reliably performed. In addition, the position of the shaft portion is determined by the movement adjustment unit, and thus the precision of positioning can be enhanced as compared with a case where the shaft portion is positioned only by the polymer material actuator.

In one aspect of the above invention, the movement adjustment unit may have an electric motor installed in the housing, a cam connected to the electric motor and rotating by a drive force of the electric motor, and a cam follower provided on the shaft portion and abutting against the cam.

According to this configuration, the cam connected to the electric motor is rotated by the drive force of the electric motor and the cam follower abutting against the cam is provided on the shaft portion. As a result, the shaft portion provided with the cam follower moves by the cam being rotated by the electric motor. In other words, the shaft portion is linearly moved by the thrust that is generated from the electric motor and the polymer material actuator. In addition, since the position of the shaft portion is determined by the electric motor, the cam, and the cam follower, the precision of positioning can be enhanced as compared with a case where the shaft portion is positioned only by the polymer material actuator.

In one aspect of the above invention, the polymer material actuator may have a first polymer material actuator moving the shaft portion in a first direction and a second polymer material actuator moving the shaft portion in a second direction opposite to the first direction, and the actuator may have an adjustment unit adjusting the amount of a voltage or current applied to the first polymer material actuator and the second polymer material actuator.

According to this configuration, the amount of the voltage or current applied to the first polymer material actuator and the second polymer material actuator is adjusted and the first polymer material actuator or the second polymer material actuator is extended or contracted in accordance with the adjusted voltage or current amount. As a result, the shaft portion moves in the first direction along the axial direction or moves in the second direction opposite to the first direction.

In one aspect of the above invention, the movement adjustment unit may have a detection unit detecting the position of the shaft portion and a regulation portion regulating the movement of the shaft portion based on a detection result of the detection unit.

According to this configuration, the position of the shaft portion is detected by the detection unit and the regulation portion regulates the movement of the shaft portion based on the detection result of the detection unit. As a result, the position of the shaft portion is determined by the detection unit and the regulation portion, and thus the precision of positioning can be enhanced as compared with a case where the shaft portion is positioned only by the polymer material actuator.

### Advantageous Effects of Invention

The shaft portion is moved along the axial direction by the polymer material actuator, and the movement adjustment unit determines the position of the shaft portion in accordance with the position of the shaft portion. Accordingly, fixation of a sliding surface is unlikely to occur and a desired operation can be reliably performed.

### Brief Description of Drawings

Fig. 1 is a longitudinal cross-sectional view illustrating an actuator according to a first embodiment of the present invention.
Fig. 2 is a longitudinal cross-sectional view illustrating the actuator according to the first embodiment of the present invention and is a view cut along a plane perpendicular to the cut plane of Fig. 1.
Fig. 3 is a longitudinal cross-sectional view illustrating a modification example of the actuator according to the first embodiment of the present invention.
Fig. 4 is a longitudinal cross-sectional view illustrating the modification example of the actuator according to the first embodiment of the present invention and is a view cut along a plane perpendicular to the cut plane of Fig. 3.
Fig. 5 is a longitudinal cross-sectional view illustrating an actuator according to a second embodiment of the present invention.

### Description of Embodiments

### [First Embodiment]

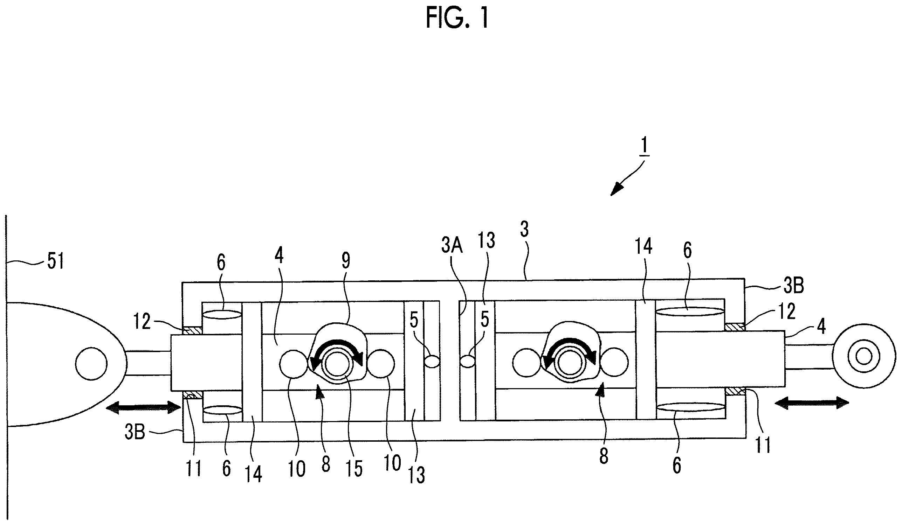

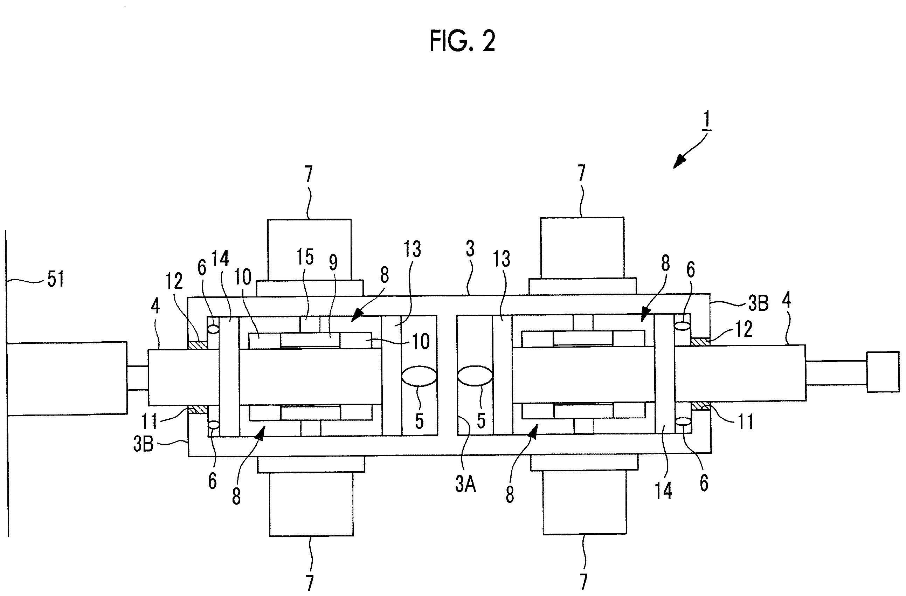

Hereinafter, an actuator 1 according to a first embodiment of the present invention will be described with reference to Fig. 1 and 2.

The actuator 1 is used for, for example, driving a control surface (control wing surface) of an aircraft. In this case, one end of the actuator 1 is provided on an airframe (main wing or the like) 51 side of the aircraft and the other end of the actuator 1 is provided on the control surface side of the aircraft. The control surface performs a predetermined operation, such as an upward-downward movement, by the actuator 1. Another member capable of transmitting a force is installed between the actuator 1 and the airframe 51 or between the actuator 1 and the control surface.

The actuator 1 includes a housing 3, a shaft (shaft portion) 4 moving into and out of the housing 3, polymer material actuators 5 and 6, an electric motor 7, a cam mechanism 8, and the like.

It should be noted that the shaft 4 moves in and out one by one on one end side and the other end side of the housing 3 in the present embodiment. The mechanism moving the shaft 4 in and out is the same on both sides, and thus one configuration will be described below. It should be noted that the present invention is not limited to this example, and a configuration in which the shaft 4 moves in and out only on one end side of the housing is also possible.

The electric motor 7 and the cam mechanism 8, which has a cam 9 and a cam follower 10, constitute a movement adjustment unit according to one aspect of the present invention. Accordingly, the movement of the shaft 4 is adjusted in accordance with the position of the shaft 4 by the electric motor 7 and the cam mechanism 8.

The housing 3 has a tubular shape that is long in one direction along the axial direction of the shaft 4, and one end side of the shaft 4 is accommodated in the housing 3. The polymer material actuators 5 and 6 as well as the shaft 4 are installed in the housing 3. In addition, a lubricant is accommodated in the housing 3 and the lubricant lubricates the sliding surface between the outer peripheral surfaces of support members 13 and 14 of the shaft 4 and the inner peripheral surface of the housing 3.

The shaft 4, which is a shaft-shaped member, is installed so as to penetrate an opening portion 11 formed in an end wall 3B of the housing 3. An oil seal 12 is installed between the opening portion 11 and the shaft 4, and the oil seal 12 prevents the lubricant from leaking to the outside from the inside.

The support members 13 and 14, which are plate-shaped members, are provided so as to have outer peripheral surfaces in contact with the inner peripheral surface of the housing 3. The support member 13 is provided on the rear end portion side of the shaft 4 so as to have a plate surface perpendicular to the axial direction, and the support member 14 is provided on the front end portion side of the shaft 4 so as to have a plate surface perpendicular to the axial direction. The support members 13 and 14 are installed in parallel with each other so as to be spaced apart from and face each other. It should be noted that the front end portion side of the shaft 4 is the end portion side where the shaft 4 moves in and out with respect to the housing 3 and the rear end portion side of the shaft 4 is the end portion side opposite to the end portion side where the shaft 4 moves in and out.

The polymer material actuators 5 and 6 are configured by means of a conductive polymer contracting when a voltage is applied. The polymer material actuator is also called an artificial muscle. The polymer material actuators 5 and 6 are configured by a plurality of thin plate-shaped elements being stacked, and a large displacement can be generated as a result. Applied as the polymer material actuators 5 and 6 in the present embodiment are those contracting in one direction in a case where a voltage is applied and returning to the original length, that is, extending to the side opposite to the contraction direction in a case where no voltage is applied. The length of contraction of the polymer material actuators 5 and 6 can be adjusted in accordance with the amount of the voltage or current that is applied.

The polymer material actuator 5 is installed between the support member 13 and a partition wall 3A formed in the middle of the housing 3. The polymer material actuator 6 is installed between the support member 14 and the end wall 3B formed in an end portion of the housing 3. The shaft 4 moves to the front end portion side in the housing 3 when the amount of the voltage or current that is applied to the polymer material actuators 5 and 6 is adjusted, the polymer material actuator 5 extends, and the polymer material actuator 6 contracts. In contrast, the shaft 4 moves to the rear end portion side in the housing 3 when the amount of the voltage or current that is applied to the polymer material actuators 5 and 6 is adjusted, the polymer material actuator 6 extends, and the polymer material actuator 5 contracts.

It is possible to adjust the position of the shaft 4 to the front end portion side or the rear end portion side by adjusting the amount of the voltage or current that is applied to the polymer material actuator 5 and the polymer material actuator 6. An adjustment unit adjusts the amount of the voltage or current that is applied to the polymer material actuator 5 and the polymer material actuator 6 based on, for example, a drive signal from a control unit controlling the driving of the actuator 1 or position information from the electric motor 7 to which a servo motor is applied.

The electric motor 7, which is a servo motor or the like, outputs a rotational motion so as to adjust the movement of the shaft 4 in accordance with the position of the shaft 4. The electric motor 7 operates based on a drive signal from the control unit controlling the driving of the actuator 1. A resolver, an encoder, a tacho generator, or the like detects the angle of a rotary shaft 15 of the electric motor 7. The electric motor 7 is controlled by feedback control such that the shaft 4 reaches a target drive amount.

The electric motor 7 is installed outside the housing 3 and is connected to the cam 9 of the cam mechanism 8 via the rotary shaft 15. A magnetic geared motor may be used as the electric motor 7. In this case, fixation (jamming) attributable to a gear is unlikely to occur since mechanical gear meshing is eliminated.

In the example illustrated in Fig. 1 and 2, the rotary shaft 15 of the electric motor 7 is installed in a direction perpendicular to the axial direction of the shaft 4. In addition, in the example illustrated in Fig. 1 and 2, two electric motors 7 are installed across the axis of the shaft 4. As a result, the shaft 4 can be stably moved in a well-balanced manner and redundancy can be ensured. It should be noted that one electric motor 7 may be installed with respect to one shaft 4 or three or more electric motors 7 may be installed with respect to one shaft 4.

The cam mechanism 8 has the cam 9 and the cam follower 10. The outer surface of the cam 9 and the outer surface of the cam follower 10 come into contact with each other. The cam 9 is connected to the electric motor 7 via the rotary shaft 15 and rotated by the drive force of the electric motor 7. The cam follower 10 is fixedly provided on both sides of the cam 9 on the outer surface of the shaft 4. One cam 9 and two cam followers 10 constitute a conjugate cam, and the rotational motion transmitted from the electric motor 7 is converted into a bidirectional linear motion. In other words, the shaft 4 is moved to the front end portion side or the rear end portion side in the housing 3 by the rotational force from the electric motor 7.

Next, the operation of the actuator 1 having the above-described configuration will be described.

The polymer material actuators 5 and 6 are driven and the electric motor 7 is driven when a drive signal for driving the actuator 1 is input to the actuator 1.

In a case where the shaft 4 is moved to the front end portion side, the amount of the voltage or current applied to the polymer material actuators 5 and 6 is adjusted, the polymer material actuator 5 is extended, and the polymer material actuator 6 is contracted. In a case where the shaft 4 is moved to the rear end portion side, the amount of the voltage or current applied to the polymer material actuators 5 and 6 is adjusted, the polymer material actuator 6 is extended, and the polymer material actuator 5 is contracted.

The polymer material actuators 5 and 6 and the electric motor 7 are driven, while feedback control is performed, in accordance with the target drive amount of the actuator 1, and the movement of the shaft 4 is adjusted. Then, the electric motor 7 stops moving the shaft 4 when the target drive amount is reached. At this time, the electric motor 7 resists the drive force of the polymer material actuators 5 and 6 and the position of the shaft 4 is maintained.

According to the present embodiment described above, the shaft 4 is linearly moved by the cam mechanism 8 having the polymer material actuators 5 and 6, the cam 9, and the cam follower 10, the position of the shaft 4 is adjusted by the cam mechanism 8, and thus no ball screw is required in the actuator 1 and fixation attributable to a ball screw is unlikely to occur.

In addition, the shaft 4 is linearly moved by the thrust that is generated from the electric motor 7 and the polymer material actuators 5 and 6. Accordingly, each maximum required thrust can be reduced as compared with a case where thrust is obtained by the electric motor or the polymer material actuator alone. As a result, the electric motor 7 and the polymer material actuators 5 and 6 can be reduced in size or weight as compared with a case where only the electric motor or only the polymer material actuator is installed.

Although the thrust is reduced in the event of a failure in either the electric motor 7 or the polymer material actuators 5 and 6, the shaft 4 can be moved by the electric motor 7 or the polymer material actuators 5 and 6 in which no failure has occurred. Accordingly, according to the present embodiment, redundancy can be provided by both the electric motor 7 and the polymer material actuators 5 and 6 being provided.

Further, since the position of the shaft 4 of the actuator 1 is determined by the electric motor 7, the cam 9, and the cam follower 10, the precision of positioning can be enhanced as compared with a case where the shaft 4 is positioned only by the polymer material actuators 5 and 6.

Furthermore, in a case where a magnetic geared motor is applied as the electric motor 7, fixation (jamming) attributable to a gear is unlikely to occur since mechanical gear meshing is eliminated.

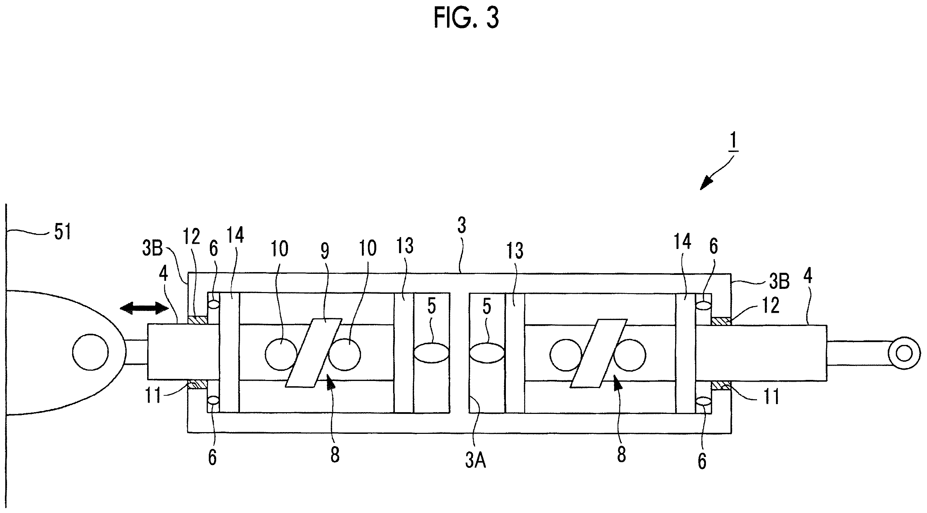

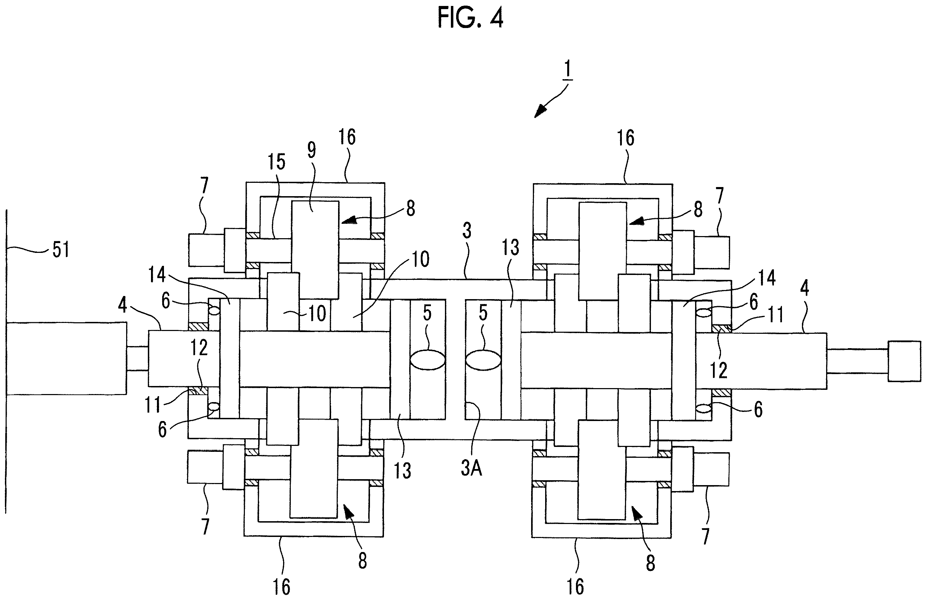

Although a case where the rotary shaft 15 of the electric motor 7 is provided so as to be perpendicular to the axial direction of the shaft 4 and the cam 9 is a plate-shaped member has been described in the embodiment described above, the present invention is not limited to this example. For example, the rotary shaft 15 of the electric motor 7 may be provided in parallel with the axial direction of the shaft 4 as illustrated in Fig. 3 and 4. In this case, a three-dimensional cam mechanism is applied as the cam mechanism 8 having the cam 9 and the cam follower 10. In the example illustrated in Fig. 3 and 4, a supporting housing 16 is further installed outside the housing 3 in order to support the rotary shaft 15 of the electric motor 7 in parallel with the axial direction of the shaft 4. The cam 9 is connected to the rotary shaft 15. The supporting housing 16 supports the rotary shaft 15 of the electric motor 7. Also in this modification example, the same action and effect as those of the above-described embodiment can be obtained.

### [Second Embodiment]

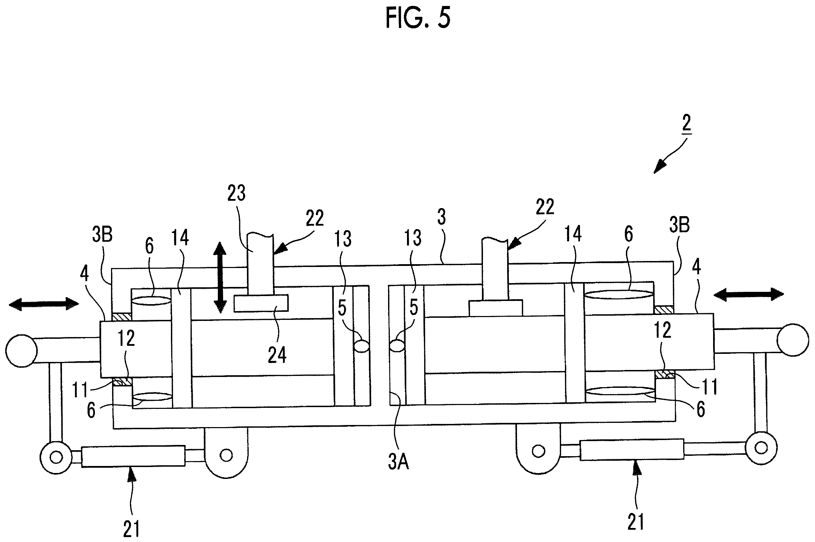

Next, an actuator 2 according to a second embodiment of the present invention will be described with reference to Fig. 5.

Although a case where the movement adjustment unit according to one aspect of the present invention is configured by the electric motor 7 and the cam mechanism 8 having the cam 9 and the cam follower 10 has been described in the first embodiment described above, the present invention is not limited to this configuration. In the second embodiment, the movement adjustment unit according to one aspect of the present invention is configured by a position detection sensor 21 and a clutch mechanism 22. Accordingly, the movement of the shaft 4 is adjusted in accordance with the position of the shaft 4 by the position detection sensor 21 and the clutch mechanism 22.

The actuator 2 is used for, for example, driving a control surface (control wing surface) of an aircraft as in the case of the actuator 1.

The actuator 2 includes the housing 3, the shaft (shaft portion) 4 moving into and out of the housing 3, the polymer material actuators 5 and 6, the position detection sensor 21, the clutch mechanism 22, and the like.

The housing 3, the shaft 4, the support members 13 and 14 installed on the shaft 4, and the polymer material actuators 5 and 6 have the same configuration, action, and effect as those described in the first embodiment, and thus detailed description thereof will be omitted.

The position detection sensor 21, which is an example of a detection unit, detects the position of the shaft 4 in the axial direction. The position detection sensor 21, which is a linear potentiometer or the like, has one end portion connected to the housing 3 and the other end portion connected to the shaft 4. Information detected by the position detection sensor 21 and related to the position of the shaft 4 is output to the control unit of the clutch mechanism 22 and the adjustment units of the polymer material actuators 5 and 6.

The clutch mechanism 22 is an example of a regulation portion and has, for example, a rod 23 and an abutment part 24 installed at the tip of the rod 23. The rod 23 is a rod-shaped member, the axial direction of the rod 23 is provided so as to be perpendicular to the axial direction of the shaft 4, and the rod 23 is capable of moving in parallel with the axial direction of the rod 23. The abutment part 24 has a shape allowing contact with the outer peripheral surface of the shaft 4.

The abutment part 24 of the clutch mechanism 22 comes into contact with the outer peripheral surface of the shaft 4 based on the position detected by the position detection sensor 21, and the movement of the shaft 4 given thrust by the polymer material actuators 5 and 6 is limited. It is possible to adjust the position of the shaft 4 to the front end portion side or the rear end portion side by adjusting the amount of the voltage or current that is applied to the polymer material actuator 5 and the polymer material actuator 6. The adjustment unit adjusts the amount of the voltage or current that is applied to the polymer material actuator 5 and the polymer material actuator 6 based on position information from the position detection sensor 21.

The polymer material actuators 5 and 6 and the clutch mechanism 22 are controlled by feedback control such that the shaft 4 reaches a target drive amount.

Next, the operation of the actuator 2 having the above-described configuration will be described.

The polymer material actuators 5 and 6 are driven when a drive signal for driving the actuator 2 is input to the actuator 2. Then, the position of the shaft 4 is detected by the position detection sensor 21.

In a case where the shaft 4 is moved to the front end portion side, the amount of the voltage or current applied to the polymer material actuators 5 and 6 is adjusted, the polymer material actuator 5 is extended, and the polymer material actuator 6 is contracted. In a case where the shaft 4 is moved to the rear end portion side, the amount of the voltage or current applied to the polymer material actuators 5 and 6 is adjusted, the polymer material actuator 6 is extended, and the polymer material actuator 5 is contracted.

In addition, the clutch mechanism 22 is driven based on the position of the shaft 4 detected by the position detection sensor 21 and the abutment part 24 abuts against the outer peripheral surface of the shaft 4.

The polymer material actuators 5 and 6 and the clutch mechanism 22 are driven, while feedback control is performed, in accordance with the target drive amount of the actuator 2, and the movement of the shaft 4 is adjusted. Then, the clutch mechanism 22 stops moving the shaft 4 when the target drive amount is reached. At this time, the clutch mechanism 22 resists the drive force of the polymer material actuators 5 and 6 and the position of the shaft 4 is maintained.

According to the present embodiment described above, the shaft 4 is linearly moved by the polymer material actuators 5 and 6 and the position of the shaft 4 is adjusted by the clutch mechanism 22, and thus no gear or ball screw is required in the actuator 2 and fixation attributable to a gear or ball screw is unlikely to occur.

In addition, since the position of the shaft 4 of the actuator 2 is determined by the position detection sensor 21 and the clutch mechanism 22, the precision of positioning can be enhanced as compared with a case where the shaft 4 is positioned only by the polymer material actuators 5 and 6.

### Reference Signs List

- 1, 2: Actuator
- 3: Housing
- 3A: Partition wall
- 3B: End wall
- 4: Shaft
- 5, 6: Polymer material actuator
- 7: Electric motor
- 8: Cam mechanism
- 9: Cam
- 10: Cam follower
- 11: Opening portion
- 12: Oil seal
- 13, 14: Support member
- 15: Rotary shaft
- 16: Supporting housing
- 21: Position detection sensor
- 22: Clutch mechanism
- 23: Rod
- 24: Abutment part
- 51: Airframe

## Claims

1. An actuator comprising: a housing;
a shaft portion having one end side accommodated in the housing, having the other end side installed outside the housing, and movable along an axial direction;
a polymer material actuator accommodated in the housing, having one end connected to an inside of the housing and the other end connected to the shaft portion, and extending and contracting by voltage application; and
a movement adjustment unit adjusting a movement of the shaft portion in accordance with a position of the shaft portion.

2. The actuator according to Claim 1, wherein the movement adjustment unit has
an electric motor installed in the housing;
a cam connected to the electric motor and rotating by a drive force of the electric motor; and
a cam follower provided on the shaft portion and abutting against the cam.

3. The actuator according to Claim 1 or 2, wherein
the polymer material actuator has a first polymer material actuator moving the shaft portion in a first direction and a second polymer material actuator moving the shaft portion in a second direction opposite to the first direction, and
the actuator has an adjustment unit adjusting the amount of a voltage or current applied to the first polymer material actuator and the second polymer material actuator.

4. The actuator according to Claim 1, wherein the movement adjustment unit has
a detection unit detecting the position of the shaft portion; and
a regulation portion regulating the movement of the shaft portion based on a detection result of the detection unit.
